# EUROPEAN PATENT APPLICATION

(11) **EP 4 794 295 A1**
(43) Date of publication of application: **19.08.2026**
(21) Application number: 23955456.1
(22) Date of filing: 12.10.2023
(51) Int. Cl.: H04L 47/6275, H04L 47/24

(54) **ACCESS POINT AND TERMINAL DEVICE**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); NAGATSU, Ryo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/037061
(87) International publication number: WO 2025/079208

(57) **Abstract**

An access point of an embodiment is configured to transmit information to and from a terminal apparatus by using a plurality of radio links including a first radio link and a second radio link. The access point includes a management unit configured to set a service period allocated to transfer of the low-latency traffic to at least one of the plurality of radio links. When a first service period is scheduled in the first radio link, the management unit schedules a second service period in which the same start time and continuation period as those of the first service period are set in the second radio link, and notifies the terminal apparatus of schedule information including information of each of the first service period and the second service period. First data is transmitted via the first radio link in the first service period. First data is transmitted via the second radio link in the second service period.

## Description

### Technical Field

An embodiment relates to an access point and a terminal apparatus.

### Background Art

A wireless local area network (LAN) is known as an information communication system that wirelessly connects an access point (AP) and a terminal apparatus. The terminal apparatus can access a network via the access point by using the wireless LAN. In IEEE 802.11be, multi-link transmission is mentioned in which a plurality of links (transmission paths) having different frequency channels is established between a terminal apparatus and an access point. In the multi-link transmission, a plurality of affiliated access points (APs) provided in the same casing called access point multi-link device (AP_MLD) and a plurality of affiliated STAs provided in the same casing called non-access point multi-link device (non-AP_MLD) form a pair and perform communication. Further, in the next generation standards, a multi-AP function in which a plurality of access points communicate in cooperation and coordination has been studied.

In addition, a restricted target wake time (R-TWT) function is known as a method of transmitting and receiving low-latency traffic between an access point and a terminal apparatus. An access point using the R-TWT function sets a service period (R-TWT SP) in a period according to request latency of the low-latency traffic, and notifies the terminal apparatus of the set service period using a management frame or an action frame such as a beacon. Then, when detecting the allocation of the R-TWT SP to the terminal apparatus (low-latency terminal) that handles the low-latency traffic according to the received beacon or the like, the terminal apparatus deterministically transmits the low-latency traffic to the access point. In multi-links, a pair of any one affiliated AP and an affiliated STA may perform a TWT agreement, thereby setting up the TWT agreement in all links constituting the multi-links. The information communication system using the R-TWT function can reduce latency and jitter of the low-latency traffic.

### Citation List

### Non Patent Literature

Non Patent Literature 1: IEEE802.11be D4.0,"35.8 Restricted TWT (R-TWT)",p611-p616,July 2023

### Summary of Invention

### Technical Problem

However, in the multi-link transmission or the multi-AP function, the R-TWT function is independently set in each link or a transmission path with each access point. Then, the period during which the low-latency traffic can obtain the priority at the time of transmitting the traffic is only at the start of the R-TWT SP. Therefore, when the scheduled low-latency traffic cannot be transmitted at the start of the R-TWT SP due to interference or the like, or when communication of other low-latency traffic or non-low-latency traffic is concentrated in a link having a high channel usage rate, communication of the low-latency traffic scheduled to be transmitted may be inhibited. In such a case, there is a possibility that the request latency of the low-latency traffic cannot be satisfied.

The present invention has been made in view of the above circumstances, and an object of the present invention is to provide an access point and a terminal apparatus capable of satisfying request latency of low-latency traffic.

### Solution to Problem

An access point of an embodiment is configured to transmit information to and from a terminal apparatus by using a plurality of radio links including a first radio link and a second radio link. The access point includes a management unit configured to set a service period allocated to transfer of the low-latency traffic to at least one of the plurality of radio links. When a first service period is scheduled in the first radio link, the management unit schedules a second service period in which the same start time and continuation period as those of the first service period are set in the second radio link, and notifies the terminal apparatus of schedule information including information of each of the first service period and the second service period. First data is transmitted via the first radio link in the first service period. First data is transmitted via the second radio link in the second service period.

### Advantageous Effects of Invention

According to an embodiment, it is possible to provide an access point and a terminal apparatus capable of satisfying request latency of low-latency traffic.

### Brief Description of Drawings

Fig. 1 is a block diagram illustrating an example of an overall configuration of an information communication system according to a first embodiment.
Fig. 2 is a block diagram illustrating an example of a hardware configuration of an access point included in the information communication system according to the first embodiment.
Fig. 3 is a block diagram illustrating an example of a hardware configuration of a terminal apparatus included in the information communication system according to the first embodiment.
Fig. 4 is a block diagram illustrating an example of a functional configuration of the access point included in the information communication system according to the first embodiment.
Fig. 5 is a block diagram illustrating an example of a functional configuration of an A-AP included in the access point included in the information communication system according to the first embodiment.
Fig. 6 is a block diagram illustrating an example of a format of a beacon signal generated by a beacon control unit of the A-AP in the access point included in the information communication system according to the first embodiment.
Fig. 7 is a block diagram illustrating an example of a functional configuration of a transmission/reception unit of the A-AP in the access point included in the information communication system according to the first embodiment.
Fig. 8 is a block diagram illustrating an example of a functional configuration of the terminal apparatus included in the information communication system according to the first embodiment.
Fig. 9 is a block diagram illustrating an example of a functional configuration of an A-STA included in the terminal apparatus included in the information communication system according to the first embodiment.
Fig. 10 is a block diagram illustrating an example of a functional configuration of a transmission/reception unit of the A-STA in the terminal apparatus included in the information communication system according to the first embodiment.
Fig. 11 is a time chart illustrating an outline of an R-TWT function of the information communication system according to the first embodiment.
Fig. 12 is a flowchart illustrating an example of a method of using the R-TWT function of the information communication system according to the first embodiment.
Fig. 13 is a time chart illustrating a specific example of communication using the R-TWT function of the information communication system according to the first embodiment.
Fig. 14 is a block diagram illustrating an example of an overall configuration of an information communication system according to a second embodiment.
Fig. 15 is a block diagram illustrating an example of a functional configuration of a sharing access point included in the information communication system according to the second embodiment.
Fig. 16 is a table illustrating an example of information managed by a management unit of the sharing access point included in the information communication system according to the second embodiment.
Fig. 17 is a block diagram illustrating an example of a functional configuration of a shared access point included in the information communication system according to the second embodiment.
Fig. 18 is a flowchart illustrating an example of a method of setting up the R-TWT function of the information communication system according to the second embodiment.
Fig. 19 is a flowchart illustrating an example of a method of using the R-TWT function of the information communication system according to the second embodiment.
Fig. 20 is a time chart illustrating a specific example of communication using the R-TWT function of the information communication system according to the second embodiment.

### Description of Embodiments

Hereinafter, each embodiment will be described with reference to the drawings. Each embodiment exemplifies a device and a method for embodying the technical idea of the invention. The drawings are schematic or conceptual. Hereinafter, constituent elements that have substantially the same functions and configurations are denoted by the same reference numerals. Numbers after the characters configuring the reference numerals are referred to by reference numerals including the same characters and are used to distinguish between elements that have similar configurations. Similarly, each letter after a number configuring a reference numeral and "hyphen + number" are referred to by reference numerals including the same number and are used to distinguish between elements that have similar configurations. If it is not necessary to distinguish elements denoted by reference numerals containing the same letters or numbers from one another, these elements are referred to by reference numerals containing only letters or numbers. Hereinafter, the "access point" will be appropriately abbreviated as "AP".

### <1> First Embodiment

In an information communication system 1 according to the first embodiment, an access point and a terminal apparatus establish a multi-link connection. Then, a single R-TWT service period is duplicated to each link, and the R-TWT service period is scheduled in a plurality of links at the same timing. Hereinafter, details of the information communication system 1 according to the first embodiment will be described.

### <1-1> Configuration

First, a configuration of the information communication system 1 according to the first embodiment will be described. In the following description, a case where a multi-link connection using three links is established between an access point and a terminal apparatus in the information communication system 1 will be described as an example.

### <1-1-1> Overall Configuration of Information Communication System 1

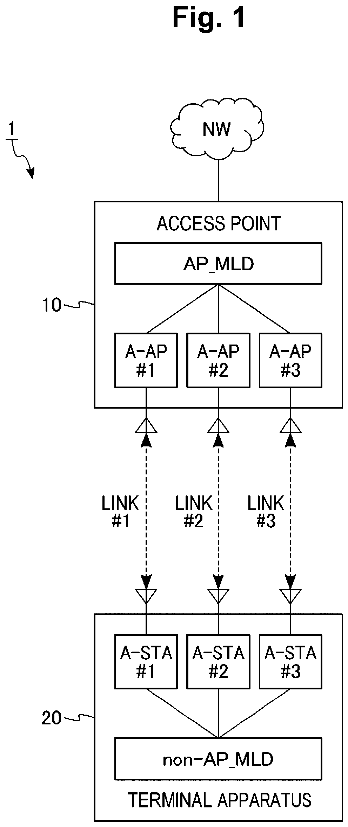

Fig. 1 is a block diagram illustrating an example of an overall configuration of the information communication system 1 according to the first embodiment. As illustrated in Fig. 1, the information communication system 1 includes, for example, an access point 10 and a terminal apparatus 20.

The access point 10 is a type of access point of the wireless LAN. The access point 10 is connected to a network NW in a wired or wireless manner, and is configured to perform wired communication or wireless communication with a server, which is not illustrated, on the network NW. In addition, the access point 10 is wirelessly connected to the terminal apparatus 20 and is configured to wirelessly communicate with the terminal apparatus 20.

The terminal apparatus 20 is a wireless terminal such as a smartphone or a personal computer (PC). The terminal apparatus 20 is disposed so as to be included in a communicable area of the access point 10. The terminal apparatus 20 is wirelessly connected to the access point 10, and is configured to wirelessly communicate with the access point 10.

The wireless communication used in the information communication system 1 conforms to, for example, the IEEE 802.11 standard. The IEEE 802.11 standard includes, for example, a wireless communication function based on an open systems interconnection (OSI) reference model. In the OSI reference model, the wireless communication function is divided into seven layers (first layer: physical layer, second layer: data link layer, third layer: network layer, fourth layer: transport layer, fifth layer: session layer, sixth layer: presentation layer, seventh layer: application layer). The data link layer includes a logical link control (LLC) sublayer and a media access control (MAC) sublayer. As a frequency band used in the wireless communication of the information communication system 1, for example, a 2.4 GHz band, a 5 GHz band, a 6 GHz band, a 45 GHz band, and a 60 GHz band can be used. A plurality of channels is allocated to each frequency band.

In addition, in the information communication system 1, each of the access point 10 and the terminal apparatus 20 supports a restricted target wake time (R-TWT) function. The R-TWT function is a function of allocating a service period in which traffic for which low latency is requested can be preferentially exchanged to the terminal apparatus 20. In the specification, the service period set by the R-TWT function is referred to as "R-TWT service period (R-TWT SP)", and the traffic for which low latency is requested is referred to as "low-latency traffic".

The access point 10 using the R-TWT function can allocate the R-TWT SP to the link and gives the terminal apparatus 20 a frame exchange opportunity preferentially. The frame exchange opportunity corresponds to an opportunity in which the traffic (data) is transmitted by frame exchange. The terminal apparatus 20 transmits low-latency traffic to the access point 10 on the basis of, for example, reception of a trigger frame in the R-TWT SP from the access point 10. As described above, the R-TWT function can improve the latency of low-latency traffic by preferentially transmitting the low-latency traffic of the terminal apparatus 20 in the R-TWT SP.

Further, in the information communication system 1, each of the access point 10 and the terminal apparatus 20 supports multi-link communication using a plurality of channels (links) as a communication method. Hereinafter, an outline of a configuration used in multi-link communication in each of the access point 10 and the terminal apparatus 20 will be described with reference to Fig. 1.

The access point 10 includes, for example, an access point multi-link device (AP_MLD) and a plurality of affiliated APs (A-APs). The AP_MLD is a multi-link device (MLD) that manages a link state and wireless communication of each of the plurality of A-APs. The AP_MLD can also perform processing for establishing multi-links between the access point 10 and the terminal apparatus 20. Each A-AP corresponds to a radio signal processing unit that can establish a radio link with the terminal apparatus 20. In the present example, the access point 10 includes A-AP #1, A-AP #2, and A-AP #3 as the plurality of A-APs.

The terminal apparatus 20 includes, for example, a non-access point multi-link device (non-AP_MLD) and a plurality of affiliated stations (A-STAs). The non-AP_MLD is a multi-link device (MLD) that manages a link state and wireless communication of each of the plurality of A-STAs. The non-AP_MLD can also perform processing for establishing multi-links between the access point 10 and the terminal apparatus 20. Each A-STA corresponds to a radio signal processing unit that can establish a radio link with the access point 10. In the present example, the terminal apparatus 20 includes A-STA #1, A-STA #2, and A-STA #3 as the plurality of A-STAs.

In the present example, A-APs #1 to #3 of the access point 10 establish links with A-STAs #1 to #3 of the terminal apparatus 20, respectively. Hereinafter, the link between A-AP #1 and A-STA #1 is referred to as "link #1". The link between A-AP #2 and A-STA #2 is referred to as "link #2". The link between A-AP #3 and A-STA #3 is referred to as "link #3". In the multi-link connection, different channels are allocated to A-APs #1 to #3. The same frequency band may be used or different frequency bands may be used for A-APs #1 to #3. In the multi-link connection, different channels are allocated to A-STAs #1 to #3. The same frequency band may be used or different frequency bands may be used for A-STAs #1 to #3.

When the R-TWT function is used in multi-links, the AP_MLD of the access point 10 may schedule the R-TWT SP so that the R-TWT SP is synchronized in the plurality of links. Then, the AP_MLD allocates the scheduled R-TWT SP to each link, and outputs low-latency data to the A-AP corresponding to the link to which the R-TWT SP is allocated. In addition, when setting a new R-TWT SP, the AP_MLD determines whether or not the new R-TWT SP overlaps with another R-TWT SP scheduled in advance, and determines whether or not the new R-TWT SP can be scheduled. Each A-AP broadcasts schedule information of the R-TWT SP set by the AP_MLD as a radio signal, and sets the R-TWT SP according to the schedule information. In addition, the A-AP transmits data input from the AP_MLD as a radio signal, and outputs the received radio signal to the AP_MLD.

In a case where the R-TWT function is used in multi-links, the non-AP_MLD of the terminal apparatus 20 performs output to the A-STA corresponding to the link to which the R-TWT SP is allocated at the timing of input of the low-latency data from the higher level according to the schedule information broadcasted from the access point 10. Each A-STA outputs the schedule information and the data received as a radio signal to the non-AP_MLD, and outputs the data input from the non-AP_MLD as a radio signal.

Note that the AP_MLD may synchronize the transmission time in each link. As a transmission time synchronization method, a master clock held by the AP_MLD may be referred to, or time information notification of which is provided from the network NW may be referred to. Similarly, the non-AP_MLD may synchronize the transmission time in each link. As a transmission time synchronization method, a master clock held by the non-AP_MLD may be referred to, or time information notification of which is provided from the AP_MLD of the access point 10 may be referred to. A more detailed functional configuration of each of the access point 10 and the terminal apparatus 20 will be described below.

### <1-1-2> Hardware Configuration of Information Communication System 1

Hereinafter, a hardware configuration of the information communication system 1 according to the first embodiment will be described.

### <1-1-2-1> Hardware Configuration of Access Point 10

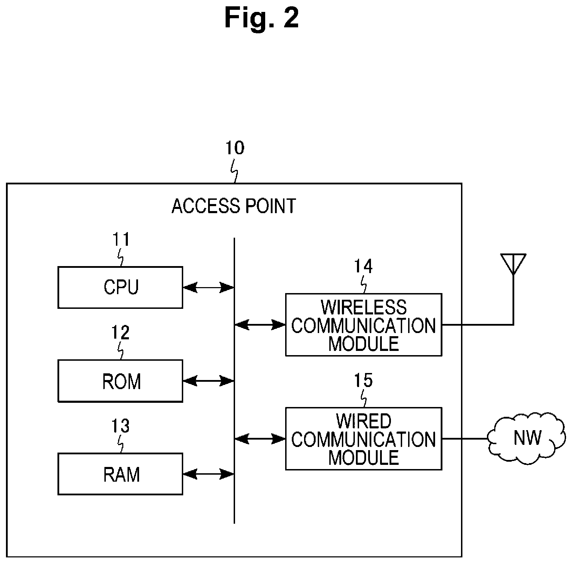

Fig. 2 is a block diagram illustrating an example of a hardware configuration of the access point 10 included in the information communication system 1 according to the first embodiment. As illustrated in Fig. 2, the access point 10 includes, for example, a central processing unit (CPU) 11, read only memory (ROM) 12, random access memory (RAM) 13, a wireless communication module 14, and a wired communication module 15.

The CPU 11 is an integrated circuit capable of executing various programs and controls the entire operation of the access point 10. The ROM 12 is, for example, a nonvolatile semiconductor memory and stores a program for controlling the access point 10, control data, and the like. The RAM 13 is, for example, a volatile semiconductor memory, and is used as a work area for the CPU 11. The wireless communication module 14 is a circuit that is configured to be able to transmit and receive a radio signal via an antenna and is used to transmit and receive data and the like to and from the terminal apparatus 20. The wired communication module 15 is a circuit used to transmit and receive data and the like with a wired signal and is configured to be connectable to the network NW.

Note that the access point 10 may have another hardware configuration. For example, the access point 10 may be wirelessly connected to the network NW. In this case, the wired communication module 15 can be omitted from the access point 10. The antenna may be built in the access point 10 or may be externally connected. The CPU 11 may be referred to as a "processor". The wireless communication module 14 may be referred to as a "communication circuit".

### <1-1-2-2> Hardware Configuration of Terminal Apparatus 20

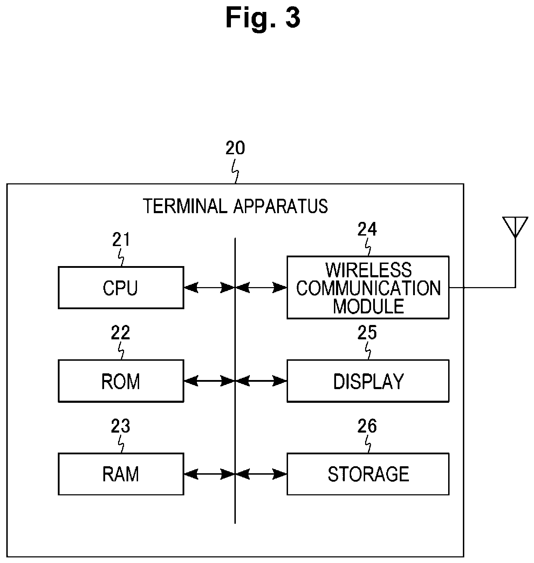

Fig. 3 is a block diagram illustrating an example of a hardware configuration of the terminal apparatus 20 included in the information communication system 1 according to the first embodiment. As illustrated in Fig. 3, the terminal apparatus 20 includes, for example, a CPU 21, ROM 22, RAM 23, a wireless communication module 24, a display 25, and a storage 26.

The CPU 21 is an integrated circuit capable of executing various programs, and controls the entire operation of the terminal apparatus 20. The ROM 22 is, for example, a nonvolatile semiconductor memory and stores a program for controlling the terminal apparatus 20, control data, and the like. The RAM 23 is, for example, a volatile semiconductor memory, and is used as a work area for the CPU 21. The wireless communication module 24 is a circuit that is configured to be able to transmit and receive a radio signal via an antenna and is used to transmit and receive data and the like to and from the access point 10. The display 25 displays, for example, a graphical user interface (GUI) corresponding to application software. The storage 26 is a nonvolatile storage device, and stores, for example, system software or the like of the terminal apparatus 20.

Note that the terminal apparatus 20 may have another hardware configuration. For example, in a case where the terminal apparatus 20 is an Internet of Things (IoT) terminal or the like, the display 25 may be omitted from the terminal apparatus 20. The display 25 may include a function as an input interface of the terminal apparatus 20. The antenna may be built in the terminal apparatus 20 or may be externally connected. The CPU 21 may be referred to as a "processor". The wireless communication module 24 may be referred to as a "communication circuit".

### <1-1-3> Functional Configuration of Information Communication System 1

Hereinafter, a functional configuration of the information communication system 1 according to the first embodiment will be described.

### <1-1-3-1> Functional Configuration of Access Point 10

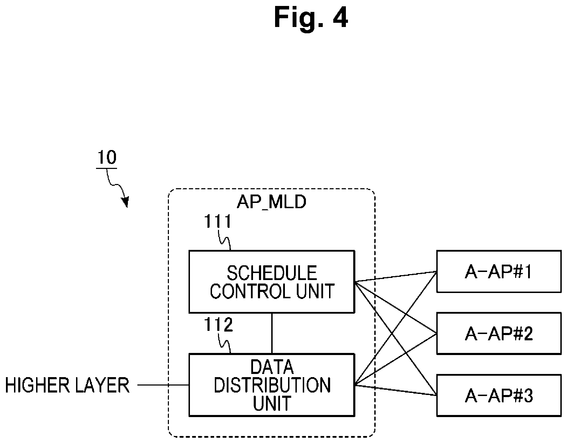

Fig. 4 is a block diagram illustrating an example of a functional configuration of the access point 10 included in the information communication system 1 according to the first embodiment. As illustrated in Fig. 4, the AP_MLD of the access point 10 includes, for example, a schedule control unit 111 and a data distribution unit 112.

The schedule control unit 111 controls (manages) the schedule of the R-TWT SP to be allocated to each link constituting the multi-links. The schedule control unit 111 has a function of scheduling the R-TWT SP for the low-latency data having the highest priority and allocating the R-TWT SP to each link. Then, the schedule control unit 111 outputs schedule information including the determined schedule to each A-AP and the data distribution unit 112. In addition, the schedule control unit 111 has a function of synchronizing the internal time of each A-AP.

The data distribution unit 112 performs output to the A-AP corresponding to the link to which the R-TWT SP is allocated at the timing when the low-latency data (low-latency traffic) is input from the higher layer. For example, based on the schedule information of the R-TWT SP notification of which is provided from the schedule control unit 111, the A-AP in which the R-TWT SP is set is determined at the timing when the data is input, and the low-latency data is output to the A-AP.

Note that each link may have a time zone already reserved by another R-TWT SP. Therefore, the schedule control unit 111 may request information regarding the period in which transmission cannot be performed to each A-AP constituting the multi-links, and adjust (for example, shorten) the timing of the R-TWT SP to be allocated to each link so as not to cause a collision on the basis of a response from each A-AP. In a case where a collision occurs, the schedule control unit 111 may not perform scheduling in the link. As the period in which transmission cannot be performed, another periodic R-TWT SP in each link, reservation by another basic service set (BSS) using the same channel, reservation by a network allocation vector (NAV), or the like is conceivable.

### (1: Functional Configuration of A-AP)

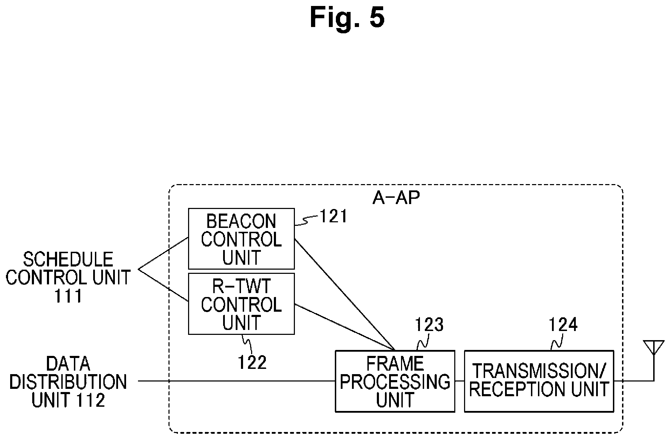

Fig. 5 is a block diagram illustrating an example of a functional configuration of the A-AP included in the access point 10 included in the information communication system 1 according to the first embodiment. As illustrated in Fig. 5, each A-AP includes, for example, a beacon control unit 121, an R-TWT control unit 122, a frame processing unit 123, and a transmission/reception unit 124.

The beacon control unit 121 generates a beacon signal and outputs the beacon signal to the frame processing unit 123. The beacon signal includes, for example, the schedule information of the R-TWT SP. The beacon control unit 121 of each A-AP may broadcast the schedule (for example, the start time (TWT start time) and the continuation period (TWT continuation period) of the R-TWT SP) of the R-TWT SP set in its own link (channel) or another link (channel). In a case where the beacon control unit 121 broadcasts the schedules of the R-TWT SPs of all the links only in the primary link set in the multi-links, the beacon control unit broadcasts only the schedule of the R-TWT SP corresponding to the link in the other links. When there is a setting such as an R-TWT SP in the received beacon signal of another access point 10, the beacon control unit 121 notifies the schedule control unit 111 of the setting.

The R-TWT control unit 122 extracts what corresponds to its own channel from the schedule information of the R-TWT SP input from the schedule control unit 111. Then, the R-TWT control unit 122 outputs the trigger frame to the frame processing unit 123 at the start time of the R-TWT SP allocated to its own channel. The R-TWT control unit 122 may include, in the trigger frame, the continuation period or the end time of the R-TWT SP and a set of the identifier of a target link of the next R-TWT SP, the TWT start time, and the TWT continuation period.

The frame processing unit 123 is a functional block that executes processing corresponding to the MAC sublayer of the second layer. When data or the like is input from the data distribution unit 112, the frame processing unit 123 adds a MAC header to generate a MAC frame, and outputs the MAC frame to the transmission/reception unit 124. When the trigger frame is input from the R-TWT control unit 122, the frame processing unit 123 transfers the input trigger frame to the transmission/reception unit 124. The frame processing unit 123 may be configured to generate a beacon signal or a trigger frame on the basis of information input from the beacon control unit 121 or the R-TWT control unit 122.

In addition, in a case where the MAC frame is input from the transmission/reception unit 124, the frame processing unit 123 processes the MAC header and outputs the input frame to the data distribution unit 112 or the beacon control unit 121 according to the frame type. For example, in a case where a data frame is input from the transmission/reception unit 124, the frame processing unit 123 outputs the input frame to the data distribution unit 112. When a control frame including the schedule information of the R-TWT function is input from the transmission/reception unit 124, the frame processing unit 123 outputs the input frame to the beacon control unit 121.

The transmission/reception unit 124 is a functional block that executes processing corresponding to the first layer. The transmission/reception unit 124 generates a radio frame by adding a preamble or the like to the MAC frame input from the frame processing unit 123, and converts the generated radio frame into a radio signal. Then, the transmission/reception unit 124 transmits (radiates) the converted radio signal via the antenna. In addition, the transmission/reception unit 124 extracts the MAC frame from the radio frame received by the antenna, and outputs the extracted MAC frame to the frame processing unit 123.

### (2: Format of Beacon Signal)

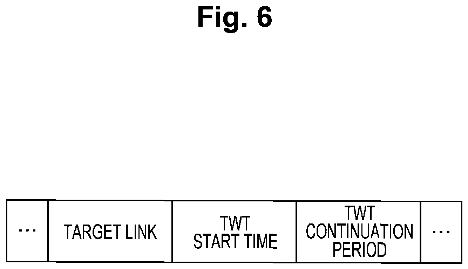

Fig. 6 is a block diagram illustrating an example of a format of a beacon signal generated by the beacon control unit 121 of the A-AP in the access point 10 included in the information communication system 1 according to the first embodiment. As illustrated in Fig. 6, the beacon signal includes, for example, information regarding the target link, the TWT start time, and the TWT continuation period.

The target link indicates the identifier of a target link to which the R-TWT SP is allocated. The identifier of the link is designated by, for example, the identifier of the A-STA. The information of the target link may include information of a single link or information of a plurality of links. The TWT start time indicates the start time of the R-TWT SP allocated to the associated target link. The TWT continuation period indicates the continuation period of the R-TWT SP allocated to the associated target link. The beacon signal may include a plurality of sets of information regarding the target link, the TWT start time, and the TWT continuation period illustrated in Fig. 6.

The beacon control unit 121 may include, in the beacon signal, the start time (TWT start time) and the continuation period (TWT continuation period) of the R-TWT SP duplicated from its own channel and set to another channel from the schedule information of the R-TWT SP input by the schedule control unit 111. In addition, the beacon control unit 121 may broadcast the schedules of the R-TWT SPs of all the links using the beacon signal. In this case, the beacon control unit 121 may include, in the beacon signal, the information of the target link, the TWT start time, and the TWT continuation period for each R-TWT

### SP.

### (3: Functional Configuration of Transmission/Reception Unit 124)

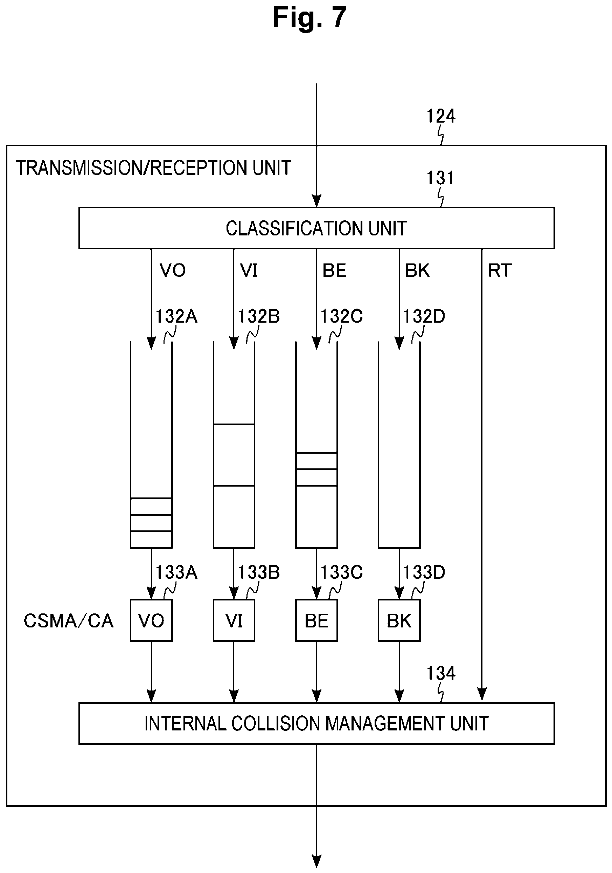

Fig. 7 is a block diagram illustrating an example of a functional configuration of the transmission/reception unit 124 of the A-AP in the access point 10 included in the information communication system 1 according to the first embodiment. The functional configuration of the transmission/reception unit 124 corresponds to a channel access means (function) of the A-AP. As illustrated in Fig. 7, the transmission/reception unit 124 includes, for example, a classification unit 131, queues 132A, 132B, 132C, and 132D, carrier sensing execution units 133A, 133B, 133C, and 133D, and an internal collision management unit 134.

The classification unit 131 classifies the MAC frame input from the frame processing unit 123 into a plurality of access categories VO (Voice), VI (Video), BE (Best Effort), BK (Background), and RT (Real Time) on the basis of the traffic type (traffic identifier (TID)) included in the MAC header. The TID is a traffic indicator and is used to identify traffic to which data belongs. The MAC frame classified into the access category RT is, for example, a high priority frame such as a trigger frame and low-latency traffic. Then, the classification unit 131 inputs the MAC frames corresponding to the access categories VO, VI, BE, and BK to the queues 132A, 132B, 132C, and 132D, respectively. The queues 132A, 132B, 132C, and 132D buffer the MAC frames corresponding to the access categories VO, VI, BE, and BK, respectively. The queues 132A, 132B, 132C, and 132D are associated with the carrier sensing execution units 133A, 133B, 133C, and 133D, respectively.

Each of the carrier sensing execution units 133A, 133B, 133C, and 133D executes carrier sensing based on carrier sense multiple access with collision avoidance (CSMA/CA) according to an access parameter set in advance when data is input to the corresponding queue 132. The access parameter is set for each access category. For example, the access parameter is set such that, for example, transmission of a radio signal is prioritized in the order of "VO", "VI", "BE", and "BK". Each of the carrier sensing execution units 133A, 133B, 133C, and 133D stops obtainment of the transmission right in a case where the state of the channel at the time of carrier sensing is a busy state, and obtains the transmission right of the MAC frame in the case of being in an idle state for a predetermined time. The carrier sensing execution unit 133 that has obtained the transmission right extracts the MAC frame from the associated queue 132 and outputs the extracted MAC frame to the internal collision management unit 134.

The internal collision management unit 134 prevents transmission collision in a case where a plurality of the carrier sensing execution units 133 simultaneously obtains the transmission right. Specifically, in a case where a plurality of MAC frames is simultaneously input, the internal collision management unit 134 preferentially outputs the MAC frame of the access category having a high priority. The MAC frame output from the internal collision management unit 134, that is, the MAC frame that has acquired the access right to the channel is converted into a radio frame after the preamble is added, and is transmitted via the antenna.

In addition, in a case where the MAC frame input from the frame processing unit 123 is classified into the access category RT, the classification unit 131 performs carrier sensing and then inputs the MAC frame to the internal collision management unit 134 without passing through each queue 132. That is, the high priority frame such as the low-latency traffic classified into the access category RT is processed with priority over the other traffic types by executing the carrier sensing without passing through each queue 132. Therefore, the high priority frame can be processed with lower latency than other traffic. When transmitting the high priority frame, the transmission/reception unit 124 may temporarily stop the carrier sensing of each carrier sensing execution unit 133. The transmission/reception unit 124 may generate the trigger frame on the basis of the information notification of which is provided from the frame processing unit 123.

In the information communication system 1, the trigger frame and the low-latency traffic input from the R-TWT control unit 122 at the start timing of the R-TWT SP are preferentially handled as the access category RT. A parameter that can be preferentially transmitted as compared with an access parameter of another access category may be set in the trigger frame and the low-latency data. The trigger frame may be transmitted by interrupting other data in the queue 132 while sharing a channel access means with a high-priority access category. In addition, when the R-TWT SP is determined, that is, when the trigger frame has been transmitted in advance, the low-latency data may be transmitted without the channel access means.

Note that as the access parameter used for the carrier sensing in the transmission/reception unit 124 of the access point 10, for example, contention window (CW) min, CWmax, arbitration interframe space (AIFS), or transmission opportunity (TXOP) Limit is used. The contention window is a parameter used to determine a transmission wait time for collision avoidance. The CWmin and the CWmax indicate a minimum value and a maximum value of the contention window, respectively. The arbitration interframe space (AIFS) indicates a fixed transmission wait time set for each access category for collision avoidance control that has a priority control function. The TXOP corresponds to an occupancy time of a channel. The TXOPLimit indicates an upper limit value of TXOP. The shorter the CWmin and the CWmax are, the easier the queue 132 can obtain the transmission right. The priority of the queue 132 increases as the AIFS decreases. The amount of data transmitted with one transmission right increases as the value of the TXOPLimit increases. The access parameter may be referred to as an enhanced distributed channel access (EDCA) parameter.

In addition, the access point 10 may have another functional configuration as long as the operation to be described below can be executed. For example, the channel access function of the access point 10 may be implemented in the frame processing unit 123 instead of the transmission/reception unit 124. The transmission priority may be determined on the basis of the request latency of aperiodic low-latency traffic, the priority of the traffic (stream classification service (SCS)), and the traffic type.

### <1-1-3-2> Functional Configuration of Terminal Apparatus 20

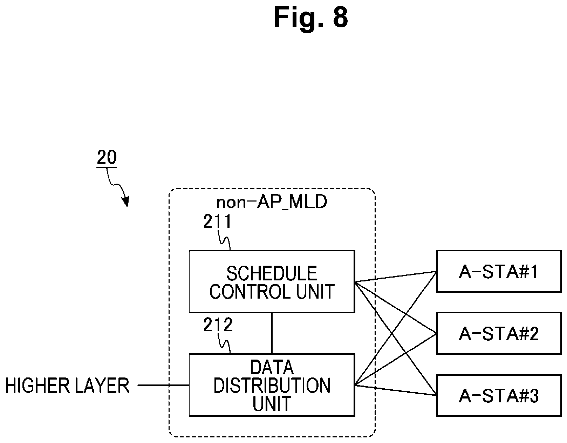

Fig. 8 is a block diagram illustrating an example of a functional configuration of the terminal apparatus 20 included in the information communication system 1 according to the first embodiment. As illustrated in Fig. 8, the non-AP_MLD of the terminal apparatus 20 includes, for example, a schedule control unit 211 and a data distribution unit 212.

The schedule control unit 211 controls (manages) the schedule of the R-TWT SP to be allocated to each link constituting the multi-links. The schedule control unit 211 outputs the schedule information of the R-TWT SP to the data distribution unit 212 on the basis of the schedule information and information of the next R-TWT SP input from each A-STA. When notification of the schedule information is provided in each link constituting the multi-links, the schedule control unit 211 updates the schedule of the R-TWT SP with the input schedule information. When notification of the schedule information is provided only in the primary link allocated in the multi-links, the schedule control unit 211 updates the schedule of the R-TWT SP with the schedule information. When information of the next R-TWT SP is input from the A-STA corresponding to the link in which the R-TWT SP is set, the schedule control unit 211 updates the schedule information with the information. The schedule control unit 211 notifies the data distribution unit 212 of the updated schedule.

When low-latency data (low-latency traffic) is input from the higher layer, based on the schedule information of the R-TWT SP notification of which is provided from the schedule control unit 211, the data distribution unit 212 determines the A-STA in which the R-TWT SP is set and outputs the low-latency data to the A-STA. In addition, the data distribution unit 212 outputs the data input from each A-STA to the higher layer.

### (1: Functional Configuration of A-STA)

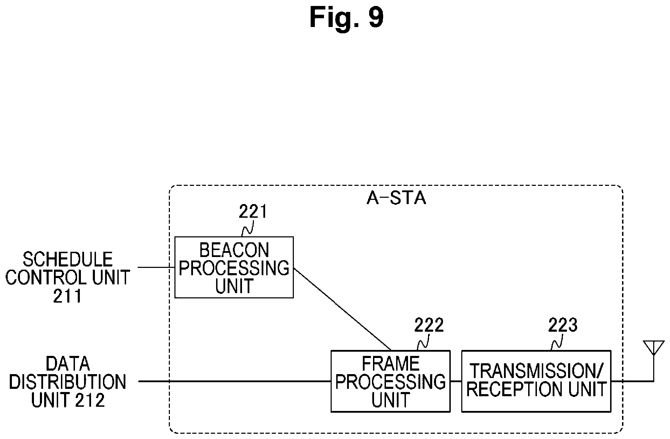

Fig. 9 is a block diagram illustrating an example of a functional configuration of the A-STA included in the terminal apparatus 20 included in the information communication system 1 according to the first embodiment. As illustrated in Fig. 9, each A-STA includes, for example, a beacon processing unit 221, a frame processing unit 222, and a transmission/reception unit 223.

The beacon processing unit 221 extracts schedule information from the beacon signal input from the frame processing unit 222 and outputs the schedule information to the schedule control unit 211. For example, the beacon processing unit 221 outputs the information of the next R-TWT SP input from the frame processing unit 222 to the schedule control unit 211, or notifies (sets) the frame processing unit 222 of the R-TWT SP associated with the channel corresponding to the A-STA. The beacon processing unit 221 may notify (set) the frame processing unit 222 of the R-TWT SP corresponding to the A-STA on the basis of an instruction of the schedule control unit 211.

The frame processing unit 222 is a functional block that executes processing corresponding to the MAC sublayer of the second layer. When data or the like is input from the data distribution unit 212, the frame processing unit 222 adds a MAC header to generate a MAC frame, and outputs the MAC frame to the transmission/reception unit 223. The frame processing unit 222 performs MAC header processing on the frame input from the transmission/reception unit 223, and outputs the frame on which the MAC header processing has been performed to the beacon processing unit 221 when the frame is a beacon signal, and outputs the frame to the data distribution unit 212 when the frame is data. When the frame input from the transmission/reception unit 223 is a trigger frame indicating the start of the R-TWT SP, the frame processing unit 222 sets the R-TWT SP based on the TWT continuation period and outputs information of the next R-TWT SP to the beacon processing unit 221. The frame processing unit 222 outputs data to the corresponding A-STA on the basis of the TID or the like on the basis of the schedule of the R-TWT SP input by the schedule control unit 211.

The transmission/reception unit 223 is a functional block that executes processing corresponding to the first layer. The transmission/reception unit 223 generates a radio frame by adding a preamble or the like to the MAC frame input from the frame processing unit 222, and converts the generated radio frame into a radio signal. Then, the transmission/reception unit 223 transmits (radiates) the converted radio signal via the antenna. In addition, the transmission/reception unit 223 extracts the MAC frame from the radio frame received by the antenna, and outputs the extracted MAC frame to the frame processing unit 222.

### (2: Functional Configuration of Transmission/Reception Unit 223)

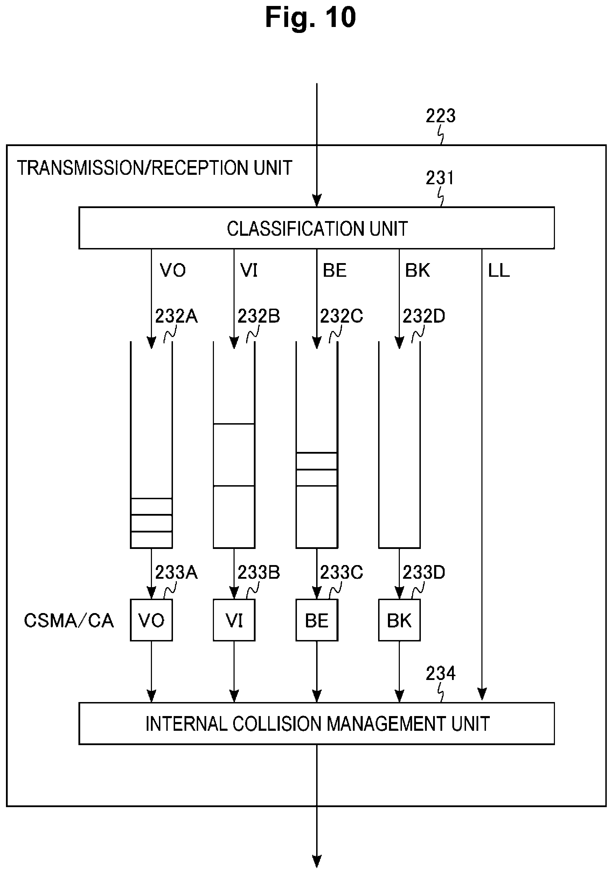

Fig. 10 is a block diagram illustrating an example of a functional configuration of the transmission/reception unit 223 of the A-STA in the terminal apparatus 20 included in the information communication system 1 according to the first embodiment. As illustrated in Fig. 10, the transmission/reception unit 223 includes, for example, a classification unit 231, queues 232A, 232B, 232C, and 232D, carrier sensing execution units 233A, 233B, 233C, and 233D, and an internal collision management unit 234.

The classification unit 231 classifies the MAC frame input from the frame processing unit 222 into a plurality of access categories VO, VI, BE, BK, and LL (Low Latency) on the basis of the traffic type included in the MAC header. The MAC frame classified into the access category LL is a high priority frame such as low-latency traffic. Then, the classification unit 231 inputs the MAC frames corresponding to the access categories VO, VI, BE, and BK to the queues 232A, 232B, 232C, and 232D, respectively. The queues 232A, 232B, 232C, and 232D buffer the MAC frames corresponding to the access categories VO, VI, BE, and BK, respectively. The queues 232A, 232B, 232C, and 232D are associated with the carrier sensing execution units 233A, 233B, 233C, and 233D, respectively.

Each of the carrier sensing execution units 233A, 233B, 233C, and 233D executes carrier sensing based on CSMA/CA according to an access parameter set in advance when data is input to the corresponding queue 232. Each of the carrier sensing execution units 233A, 233B, 233C, and 233D stops obtainment of the transmission right in a case where the state of the channel at the time of carrier sensing is a busy state, and obtains the transmission right of the MAC frame in the case of being in an idle state for a predetermined time. The carrier sensing execution unit 233 that has obtained the transmission right extracts the MAC frame from the associated queue 232 and outputs the extracted MAC frame to the internal collision management unit 234.

The internal collision management unit 234 prevents transmission collision in a case where a plurality of the carrier sensing execution units 233 simultaneously obtains the transmission right. Specifically, in a case where a plurality of MAC frames is simultaneously input, the internal collision management unit 234 preferentially outputs the MAC frame of the access category having a high priority. The MAC frame output from the internal collision management unit 234, that is, the MAC frame that has acquired the access right to the channel is converted into a radio frame after the preamble is added, and is transmitted via the antenna.

In addition, in a case where the MAC frame input from the frame processing unit 222 is classified into the access category LL, the classification unit 231 performs carrier sensing and then inputs the MAC frame to the internal collision management unit 234 without passing through each queue 232. That is, the high priority frame such as the low-latency traffic classified into the access category LL is processed with priority over the other traffic types by executing the carrier sensing without passing through each queue 232. Therefore, the high priority frame can be processed with lower latency than other traffic. When transmitting the high priority frame, the transmission/reception unit 223 may temporarily stop the carrier sensing of each carrier sensing execution unit 233.

In the information communication system 1, the low-latency traffic input from the frame processing unit 222 is preferentially handled as the access category LL. A parameter that can be preferentially transmitted as compared with an access parameter of another access category may be set in the low-latency traffic. The low-latency traffic may be transmitted by interrupting other data in the queue 232 while sharing a channel access means with a high-priority access category. In addition, when the trigger frame is received and it is determined to be in the R-TWT SP, the low-latency traffic may be transmitted without the channel access means.

As the access parameter used for the carrier sensing in the transmission/reception unit 223 of the terminal apparatus 20, for example, CWmin, CWmax, AIFS, and TXOPLimit are used. The shorter the CWmin and the CWmax are, the easier the queue 232 can obtain the transmission right. The priority of the queue 232 increases as the AIFS decreases. The amount of data transmitted with one transmission right increases as the value of the TXOPLimit increases.

Note that the terminal apparatus 20 may have another functional configuration as long as the operation to be described below can be executed. For example, the channel access function of the terminal apparatus 20 may be implemented in the frame processing unit 222 instead of the transmission/reception unit 223. The transmission priority may be determined on the basis of the request latency of low-latency traffic, the priority of the traffic (stream classification service (SCS)), and the traffic type.

### <1-2> Operation

Hereinafter, an operation of the information communication system 1 according to the first embodiment will be described.

### <1-2-1> Outline of R-TWT Function

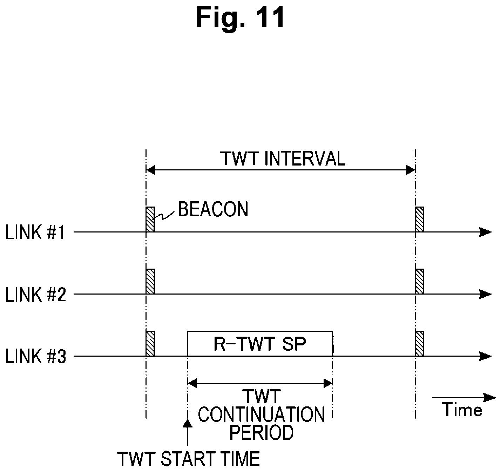

Fig. 11 is a time chart illustrating an outline of the R-TWT function of the information communication system 1 according to the first embodiment. Fig. 11 illustrates a processing sequence of the R-TWT function in a case where multi-links including three links #1 to #3 are established between the access point 10 and the terminal apparatus 20. An outline of the R-TWT function in the information communication system 1 according to the first embodiment will be described below with reference to Fig. 11.

The access point 10 sets a certain period (TWT period) at the time of setting up the R-TWT function. The TWT period is preferably set in accordance with the transmission period of the low-latency traffic. One period (TWT interval) of the TWT period includes the R-TWT SP. The R-TWT SP is determined by, for example, the TWT start time and the TWT continuation period. The TWT continuation period indicates the length of the R-TWT SP starting from the TWT start time. The terminal apparatus 20 can recognize a time based on the TWT start time and the TWT period as the TWT start time of a next R-TWT service period SP. The TWT interval also corresponds to the interval of TWT start times of adjacent R-TWT service periods SP.

When the TWT period starts, each link simultaneously transmits (radiates) a beacon signal for broadcasting the R-TWT SP. The beacon signal may include the TWT start time, the TWT continuation period, the TWT interval, a transmission suppression period, and the like as management information used by the R-TWT function. Such management information used in the R-TWT function may be included not only in the beacon signal but also in a multi-link probe response at the time of multi-link setup. Upon receiving the beacon signal, the terminal apparatus 20 acquires the TWT start time, the TWT continuation period, the TWT interval, and the like, and notifies each A-STA. In the present example, the R-TWT SP is set in link #3 based on the beacon signal. Thus, in the link to which the R-TWT SP is allocated, frame exchange of low-latency traffic is preferentially executed.

Note that, in the setup of the R-TWT function, a transmission suppression period may be set so as to overlap with the R-TWT SP. The transmission suppression period corresponds to a period in which transmission of traffic by another terminal apparatus to which a frame exchange opportunity is not preferentially given is suppressed or prohibited. In addition, the initial setting of the R-TWT function can be determined in various manners. For example, for the initial setting of the R-TWT function, an attribute of traffic such as an occurrence interval and a data amount of traffic notification of which is provided from an application that generates low-latency traffic may be used. In this case, the access point 10 notifies a server on the network NW of a type of the traffic to acquire a corresponding attribute of the traffic. Then, the access point 10 determines the initial setting of the R-TWT function on the basis of the acquired attribute of the traffic.

### <1-2-2> Method of Using R-TWT Function

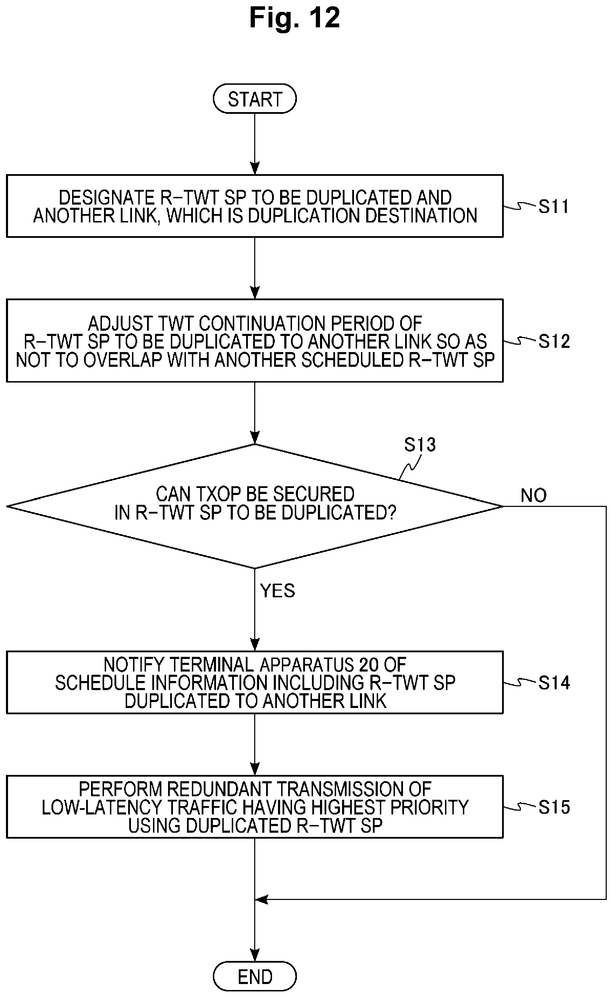

Fig. 12 is a flowchart illustrating an example of a method of using the R-TWT function of the information communication system 1 according to the first embodiment. An example of a method of using the R-TWT function of the information communication system 1 according to the first embodiment will be described below with reference to Fig. 12.

The AP_MLD of the access point 10 establishes multi-links with the terminal apparatus 20, and after scheduling at least one R-TWT SP, starts a series of processing illustrated in Fig. 12 (start).

First, the schedule control unit 111 of the AP_MLD designates the R-TWT SP to be duplicated (duplication source) and another link, which is a duplication destination (S11). The R-TWT SP, which is a duplication source, corresponds to an already scheduled R-TWT SP. For example, the schedule control unit 111 designates the R-TWT SP, which is a duplication source, on the basis of the fact that the transmission of the low-latency traffic having the highest priority is allocated. Note that the schedule control unit 111 may designate the R-TWT SP set to the link designated as the primary link as a duplication source.

Next, the schedule control unit 111 of the AP_MLD adjusts the TWT continuation period of the R-TWT SP to be duplicated to another link so as not to overlap with another scheduled R-TWT SP (S12). Specifically, in the processing of S12, the schedule control unit 111 sets the TWT start time and the TWT continuation period of the R-TWT SP to be duplicated in the same manner as the R-TWT SP, which is a duplication source. Then, when the R-TWT SP to be duplicated overlaps with another scheduled R-TWT SP, the schedule control unit 111 shortens the TWT continuation period of the R-TWT SP. As a result, the schedule control unit 111 can eliminate the overlap between the R-TWT SP to be duplicated and another R-TWT SP.

Next, the schedule control unit 111 of the AP_MLD checks whether a TXOP can be secured in the R-TWT SP to be duplicated (S13). In the processing of S13, the schedule control unit 111 compares, for example, the TXOP with the TWT continuation period of the R-TWT SP to be duplicated.

If it is confirmed by the processing of S13 that the TXOP can be secured in the R-TWT SP to be duplicated (S13: YES), that is, when the TXOP can be secured in at least one of the other links as the duplication destinations, the schedule control unit 111 proceeds to the processing of S14.

If it is confirmed by the processing of S13 that the TXOP cannot be secured in the R-TWT SP to be duplicated (S13: NO), that is, when the TXOP cannot be secured in all the other links as the duplication destinations, the schedule control unit 111 ends the series of processing of Fig. 12. In this case, the schedule control unit 111 stops the duplication of the R-TWT SP to another link, which is a duplication destination.

In the processing of S14, the AP_MLD notifies the terminal apparatus 20 of schedule information including the R-TWT SP duplicated to another link. Specifically, the schedule control unit 111 of the AP_MLD notifies the beacon control unit 121 of each A-AP of the schedule information. Then, the beacon control unit 121 of each A-AP generates a beacon signal including the received schedule, and transmits (radiates) a radio signal via the frame processing unit 123 and the transmission/reception unit 124.

When the processing of S14 is completed, the schedule control unit 111 of the AP_MLD performs redundant transmission of the low-latency traffic having the highest priority using the duplicated R-TWT SP (S15).
Specifically, the schedule control unit 111 notifies the data distribution unit 112 of the schedule information including the duplicated R-TWT SP. Then, the data distribution unit 112 outputs a trigger frame instructing transfer of the low-latency traffic to each of the A-AP to which the R-TWT SP, which is a duplication source, is allocated and the A-AP to which the R-TWT SP, which is a duplication destination, is allocated based on the same TWT start time. When the processing of S15 is completed, the AP_MLD ends the series of processing of Fig. 12.

As described above, in the information communication system 1 according to the first embodiment, the AP_MLD of the access point 10 can schedule the R-TWT SP to a plurality of links at the same timing and redundantly transmit the low-latency traffic. Note that the AP_MLD of the access point 10 may sequentially perform scheduling by executing the above-described series of processing according to the queuing status of the low-latency traffic.

### <1-2-3> Specific Example of Communication Using R-TWT Function

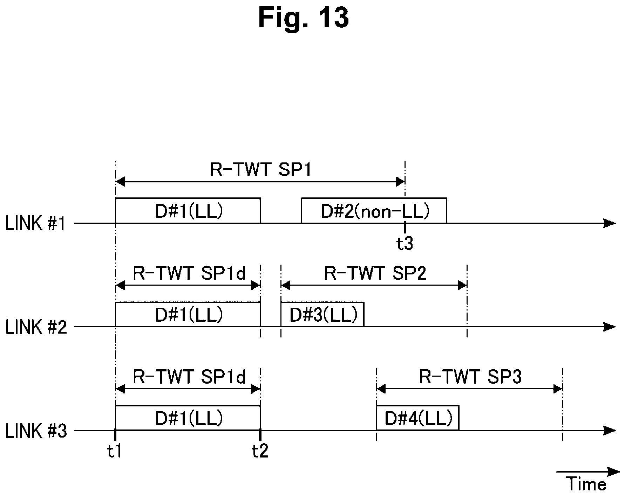

Fig. 13 is a time chart illustrating a specific example of communication using the R-TWT function of the information communication system 1 according to the first embodiment. Fig. 13 illustrates a processing sequence of the R-TWT function in a case where multi-links including three links #1 to #3 are established between the access point 10 and the terminal apparatus 20. A specific example of communication using the R-TWT function in the information communication system 1 according to the first embodiment will be described below with reference to Fig. 13.

In the present example, based on the beacon signal including the schedule information of the R-TWT SP, R-TWT SP1 is set in link #1, R-TWT SP1d and R-TWT SP2 are set in link #2, and R-TWT SP1d and R-TWT SP3 are set in link #3. R-TWT SP1 corresponds to the R-TWT SP allocated to transmission of the low-latency traffic having the highest priority. R-TWT SP2 and R-TWT SP3 correspond to the R-TWT SP scheduled before R-TWT SP1 is duplicated. R-TWT SP1d of each of links #2 and #3 corresponds to the R-TWT SP duplicated using R-TWT SP1 as a duplication source. The TWT continuation period of each R-TWT SP1d is set shorter than that of R-TWT SP1 in order to avoid overlapping with R-TWT SP2 and R-TWT SP3.

Time t1 corresponds to the TWT start time of each of R-TWT SP1 and R-TWT SP1d. At time t1, transmission of data D#1 corresponding to the low-latency traffic (LL) is started in each of links #1 to #3. The transmission of data D#1 ends at time t2. In the present example, time t2 corresponds to the end time of R-TWT SP1d. In addition, in R-TWT SP1, after data D#1 is transmitted, transmission of data D#2 corresponding to the non-low-latency traffic (non-LL) is started. In this manner, the non-low-latency traffic can be transmitted in the R-TWT SP by using a period except the TWT start time and in which the low-latency traffic is not transmitted. The transmission of data D#2 may be ended after end time t3 of R-TWT SP1. At the start time of R-TWT SP2, data D#3 corresponding to the low-latency traffic is transmitted. At the start time of R-TWT SP3, data D#4 corresponding to the low-latency traffic is transmitted.

As described above, the information communication system 1 can redundantly transmit the low-latency traffic (data D#1) using R-TWT SP1, which is a duplication source, set in link #1 and duplicated R-TWT SP1d set in each of links #2 and #3. Note that, in the present specification, "redundant transmission" means that duplicated data is transmitted in parallel using a plurality of links (transmission paths).

### <1-3> Effects of First Embodiment

With the information communication system 1 according to the first embodiment, it is possible to satisfy the request latency of the low-latency traffic. Hereinafter, effects of the first embodiment will be described in detail.

When the low-latency traffic is transmitted using one R-TWT SP, there is a possibility that the low-latency traffic cannot be transmitted at the start of the scheduled R-TWT SP due to interference or the like. In addition, when the low-latency traffic cannot be transmitted at the start of the R-TWT SP, the transmission right is deprived by the non-low-latency traffic in the R-TWT SP, and there is a possibility that the low-latency traffic cannot be transmitted as scheduled.

Therefore, in the information communication system 1 according to the first embodiment, the access point 10 duplicates the R-TWT SP scheduled in a single link constituting the multi-links to other links constituting the multi-links, and schedules the R-TWT SP to a plurality of links at the same timing. At this time, the access point 10 designates the R-TWT SP of the link, which is a duplication source, and the TWT continuation period of another link, which is a duplication destination. Then, the access point 10 redundantly transmits the low-latency traffic having the highest priority using each of the R-TWT SP, which is a duplication source, and the duplicated R-TWT SP.

As a result, the information communication system 1 according to the first embodiment can transmit the low-latency traffic using other links having a small effect of interference or the like even when affected by interference or the like in some of the plurality of links constituting the multi-links. As a result, the information communication system 1 according to the first embodiment can more reliably transmit the low-latency traffic, and can reduce the latency and jitter of the traffic. Therefore, the information communication system 1 according to the first embodiment can provide an access point and a terminal apparatus capable of satisfying request latency of low-latency traffic.

Note that, in the information communication system 1 according to the first embodiment, at the time of transmitting the low-latency traffic using the duplicated R-TWT SP, for example, the transmission timing of the frame is synchronized, and the same data is transmitted. As a result, it is possible to improve a reception success rate of a frame transmitted between the access point 10 and the terminal apparatus 20. The access point 10 may transmit different data using the R-TWT SPs of some links as long as it is possible to redundantly transmit the low-latency traffic. When different pieces of non-identical data are transmitted in the duplicated R-TWT SP, the information communication system 1 can increase the transmission speed of the low-latency traffic.

### <2> Second Embodiment

In an information communication system 1A according to the second embodiment, an access point and a terminal apparatus establish a multi-AP connection. Then, in the information communication system 1A, a single R-TWT service period is duplicated to each transmission path, and the R-TWT service period is scheduled in a plurality of transmission paths at the same timing. Hereinafter, details of the information communication system 1A according to the second embodiment will be described.

### <2-1> Configuration

First, a configuration of the information communication system 1A according to the second embodiment will be described. As one form of the multi-AP function, a plurality of second access points connected to a first access point cooperate to perform data communication between the first access point and a terminal apparatus. As the cooperative operation between the plurality of second access points, for example, offloading of distributing data and traffic exchanged between the first access point and an non-AP_MLD to each second access point is conceivable. In the present specification, the first access point in the multi-AP function is referred to as "sharing access point (AP)", and the second access point in the multi-AP function is referred to as "shared access point (AP)".

### <2-1-1> Overall Configuration of Information Communication System 1A

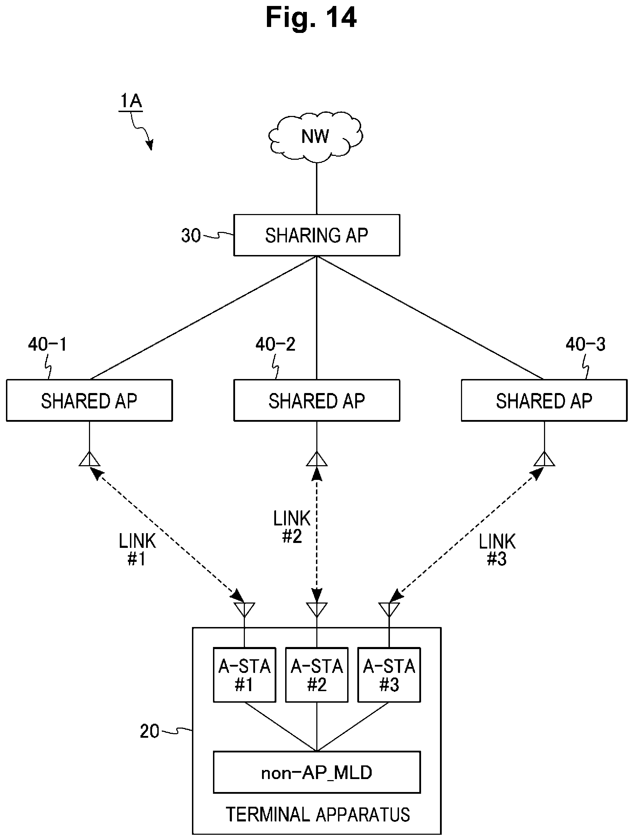

Fig. 14 is a block diagram illustrating an example of an overall configuration of the information communication system 1A according to the second embodiment. As illustrated in Fig. 14, the information communication system 1A includes a sharing access point (AP) 30, a plurality of shared access points (APs) 40, and a terminal apparatus 20.

The sharing AP 30 is a type of access point of the wireless LAN. The sharing AP 30 is connected to a network NW in a wired or wireless manner, and is configured to perform wired communication or wireless communication with a server, which is not illustrated, on the network NW. In addition, the sharing AP 30 is connected to the plurality of shared APs 40 in a wired or wireless manner, and is configured to perform wired communication or wireless communication with each of the plurality of shared APs 40. The sharing AP 30 can establish a logical multi-AP connection with a non-AP_MLD of the terminal apparatus 20.

The shared AP 40 is a type of access point of the wireless LAN. The shared AP 40 is configured to perform wired communication or wireless communication with the sharing AP 30. The shared AP 40 is wirelessly connected to an A-STA of the terminal apparatus 20 and is configured to wirelessly communicate with the A-STA of the terminal apparatus 20. The plurality of shared APs 40 is installed at positions separated from each other and includes different communicable areas. The communicable area of each of the shared APs 40 may include a portion overlapping with the communicable area of another shared AP 40. Fig. 14 illustrates a case where a multi-AP connection using three shared APs 40-1, 40-2, and 40-3 is established.

In the terminal apparatus 20 of the second embodiment, A-STA #1 is wirelessly connected to the shared AP 40-1 (link #1), A-STA #2 is wirelessly connected to the shared AP 40-2 (link #2), and A-STA #3 is wirelessly connected to the shared AP 40-3 (link #3). The wireless connection between the A-STA and the shared AP 40 corresponds to the connection between a pair of the A-AP and the A-STA in the first embodiment. Each A-STA can switch the connection destination to another shared AP 40 as the terminal apparatus 20 moves. The non-AP_MLD of the second embodiment can establish a logical multi-AP connection with the sharing AP 30 via the plurality of A-STAs and the plurality of shared APs 40 and exchange data and the like.

In the information communication system 1A, when the multi-AP connection is established, information of the plurality of shared APs 40 under the sharing AP 30 and information of the plurality of A-STAs under the non-AP_MLD are exchanged between the sharing AP 30 and the non-AP_MLD. As a result, the information communication system 1A can collectively perform comprehensive connection between the sharing AP 30 and the non-AP_MLD for the plurality of shared APs 40 and the plurality of A-STAs.

### <2-1-2> Hardware Configuration of Information Communication System 1A

In the information communication system 1A according to the second embodiment, the hardware configuration of the sharing AP 30 is, for example, similar to that of the access point 10 of the first embodiment. The hardware configuration of the shared AP 40 is similar to a configuration in which the wired communication module 15 is omitted from the access point 10 of the first embodiment in the case of wireless connection to the sharing AP 30. The hardware configuration of the shared AP 40 is similar to that of the access point 10 of the first embodiment in the case of wired connection to the sharing AP 30. A hardware configuration of the terminal apparatus 20 of the second embodiment is similar to that of the terminal apparatus 20 of the first embodiment.

### <2-1-3> Functional Configuration of Information Communication System 1A

Hereinafter, a functional configuration of the information communication system 1A according to the second embodiment will be described. Note that the functional configuration of the terminal apparatus 20 of the second embodiment is similar to that of the first embodiment except that, for example, non-AP_MLD can manage and control the multi-AP connection.

### <2-1-3-1> Functional Configuration of Sharing AP 30

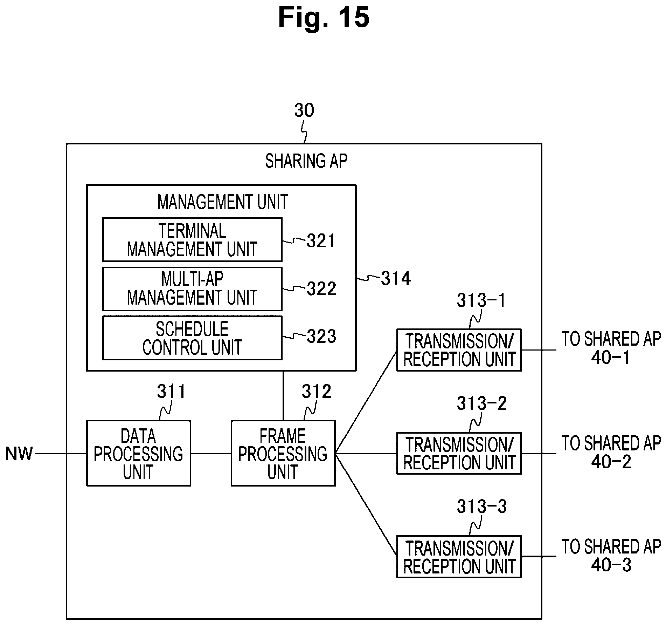

Fig. 15 is a block diagram illustrating an example of a functional configuration of the sharing AP 30 included in the information communication system 1A according to the second embodiment. As illustrated in Fig. 15, the sharing AP 30 includes, for example, a data processing unit 311, a frame processing unit 312, a plurality of transmission/reception units 313, and a management unit 314.

The data processing unit 311 outputs data input from the network NW side via the LLC sublayer to the frame processing unit 312. In addition, the data processing unit 311 outputs the data input from the frame processing unit 312 to the network NW side via the LLC sublayer.

The frame processing unit 312 exchanges management information with the management unit 314 and exchanges data with the data processing unit 311. The frame processing unit 312 distributes the management information and data input from the data processing unit 311 and the management unit 314 to the transmission/reception unit 313 connected to the shared AP 40 connected to the A-STA under the non-AP_MLD, which is a destination. In a case where the frame processing unit 312 is connected to the terminal apparatus 20 via the plurality of shared APs 40, the frame processing unit may distribute the data to the transmission/reception unit 313 according to the TID.

The transmission/reception unit 313 is connected to the shared AP 40 in a wired or wireless manner. In the present example, the plurality of transmission/reception units 313 includes transmission/reception units 313-1, 313-2, and 313-3 connected to the shared APs 40-1, 40-2, and 40-3, respectively. The transmission/reception unit 313 transmits the data and the like input by the frame processing unit 312 to the shared AP 40 connected thereto. The transmission/reception unit 313 transmits data and the like received from the shared AP 40 connected thereto to the frame processing unit 312. The transmission/reception unit 313 can exchange the management information with the frame processing unit 312. Note that the A-STA may be directly connected to the sharing AP 30. In this case, one transmission/reception unit 313 illustrated in Fig. 15 substitutes for the shared AP 40.

The management unit 314 is a multi-link device (MLD) that manages a link state and wireless communication of each of the plurality of transmission/reception units 313. The management unit 314 can also perform processing for establishing a multi-AP connection between the sharing AP 30 and the terminal apparatus 20. The management unit 314 includes a terminal management unit 321, a multi-AP management unit 322, and a schedule control unit 323.

The terminal management unit 321 manages, as a terminal management function, information of the non-AP_MLD that performs the multi-AP connection with the sharing AP 30. The terminal management unit 321 notifies the frame processing unit 312 of information for managing the terminal apparatus 20, and is used when the frame processing unit 312 distributes data and the like to the transmission/reception unit 313.

The multi-AP management unit 322 manages information regarding the multi-AP connection in the information communication system 1A. Notification of the information regarding the multi-AP connection is provided to each of the shared APs 40 via the frame processing unit 312 and the associated transmission/reception unit 313, and is used to notify, by a beacon, the terminal apparatus 20 of information of the other shared APs 40 constituting the multi-APs.

The schedule control unit 323 manages the schedule of the R-TWT SP used in the multi-AP connection. The schedule control unit 323 schedules the R-TWT SP for the low-latency data having the highest priority to each shared AP 40 and allocates the R-TWT SP to the link constituted by each shared AP 40.

Note that each link (transmission path) may have a time zone already reserved by another R-TWT SP. Therefore, the schedule control unit 323 may request information regarding the period in which transmission cannot be performed to each shared AP 40 constituting the multi-AP connection, and adjust (for example, shorten) the timing of the R-TWT SP to be allocated to each link so as not to cause a collision on the basis of a response from each shared AP 40. In a case where a collision occurs, the schedule control unit 323 may not perform scheduling in the link. As the period in which transmission cannot be performed, another periodic R-TWT SP in each link, reservation by another basic service set (BSS) using the same channel, reservation by a NAV, or the like is conceivable. The determined schedule is output to each of the shared APs 40, the frame processing unit 312, and each of the transmission/reception units 313. In addition, the management unit 314 can synchronize the internal time of each shared AP 40.

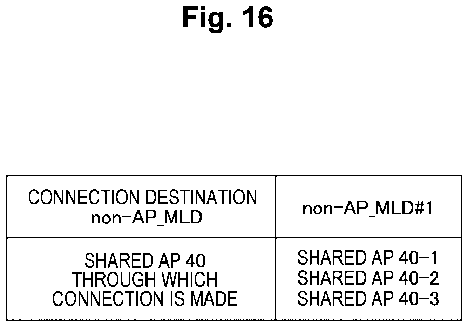

Fig. 16 is a table illustrating an example of information managed by the management unit 314 of the sharing AP 30 included in the information communication system 1A according to the second embodiment. As illustrated in Fig. 16, the management unit 314 manages information (an identifier or the like) regarding the non-AP_MLD, which is a connection destination, and information of the shared AP 40 through which connection is made in the multi-AP connection. In the present example, non-AP_MLD #1 is recorded as the identifier of the non-AP MLD. Information (identifiers or the like) of the shared APs 40-1, 40-2, and 40-3 is recorded as the information of the shared AP 40 through which connection is made. By referring to this information, the management unit 314 can grasp through which shared AP 40 under the sharing AP 30 connection to non-AP_MLD #1 is made.

### <2-1-3-2> Functional Configuration of Shared AP 40

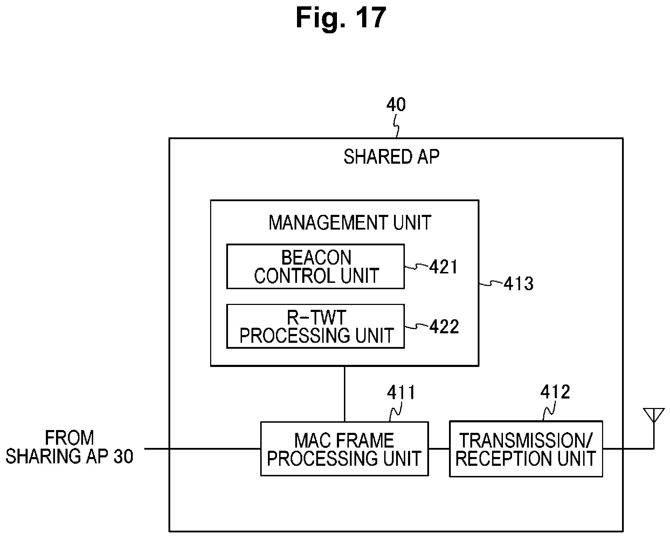

Fig. 17 is a block diagram illustrating an example of a functional configuration of the shared AP 40 included in the information communication system 1A according to the second embodiment. As illustrated in Fig. 17, the shared AP 40 includes a MAC frame processing unit 411, a transmission/reception unit 412, and a management unit 413.

The MAC frame processing unit 411 is a functional block that executes processing corresponding to the MAC sublayer of the second layer. When data or the like is input from the sharing AP 30, the MAC frame processing unit 411 adds a MAC header to generate a MAC frame, and outputs the MAC frame to the transmission/reception unit 412. The MAC frame processing unit 411 processes the MAC header of the frame input from the transmission/reception unit 412. In addition, the MAC frame processing unit 411 can generate a MAC frame from management information such as a beacon input from the management unit 413 and output the MAC frame to the transmission/reception unit 412 or the sharing AP 30.

Specifically, in a case where the MAC frame is input from the transmission/reception unit 412, the MAC frame processing unit 411 processes the MAC header and outputs the input frame to the sharing AP 30 or a beacon control unit 421 according to the frame type. For example, in a case where a data frame is input from the transmission/reception unit 412, the MAC frame processing unit 411 outputs the input frame to the sharing AP 30. When a control frame (beacon signal) including the schedule information of the R-TWT function is input from the transmission/reception unit 412, the MAC frame processing unit 411 outputs the input frame to the beacon control unit 421.

The transmission/reception unit 412 is a functional block that executes processing corresponding to the first layer. The transmission/reception unit 412 generates a radio frame by adding a preamble or the like to the MAC frame input from the MAC frame processing unit 411, and converts the generated radio frame into a radio signal. Then, the transmission/reception unit 412 transmits (radiates) the converted radio signal via the antenna. In addition, the transmission/reception unit 412 extracts the MAC frame from the radio frame received by the antenna, and outputs the extracted MAC frame to the MAC frame processing unit 411.

The management unit 413 manages a link state and wireless communication of the transmission/reception unit 412. The management unit 413 can also perform processing for establishing a multi-AP connection between the sharing AP 30 and the terminal apparatus 20. The management unit 413 includes, for example, the beacon control unit 421 and an R-TWT processing unit 422.

The beacon control unit 421 generates a beacon signal and outputs the beacon signal to the MAC frame processing unit 411. For example, the beacon signal may include the start time (TWT start time) and the continuation period (TWT continuation period) of the R-TWT SP set to its own channel from the schedule information of the R-TWT SP input from the schedule control unit 211 of the sharing AP 30. When there is a setting such as an R-TWT SP in the received beacon signal of another access point (sharing AP 30 or shared AP 40), the beacon control unit 421 notifies the schedule control unit 211 of the sharing AP 30 of the setting.

The R-TWT processing unit 422 extracts what corresponds to its own channel from the schedule information of the R-TWT SP input from the schedule control unit 211 of the sharing AP 30, and outputs the trigger frame to the MAC frame processing unit 411 at the start time of the R-TWT SP. The trigger frame may include the continuation period or the end time of the R-TWT SP, the identifier of a target link of the next R-TWT SP, the TWT start time, and the TWT continuation period.

### <2-2> Operation

Hereinafter, an operation of the information communication system 1A according to the second embodiment will be described.

### <2-2-1> Method of Setting Up R-TWT Function

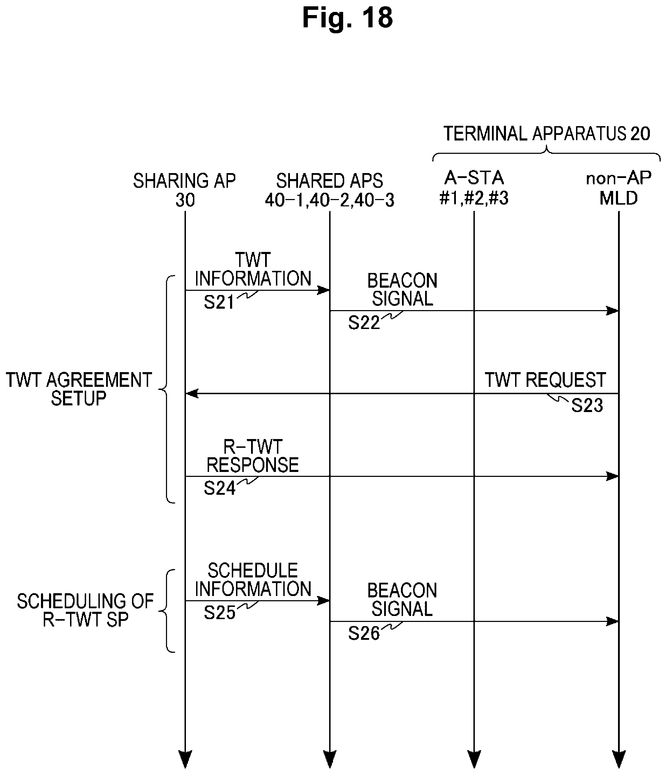

Fig. 18 is a flowchart illustrating an example of a method of setting up the R-TWT function of the information communication system 1A according to the second embodiment. Fig. 18 illustrates a setup sequence of the R-TWT function in a case where a multi-AP connection using three transmission paths (shared APs 40-1, 40-2, and 40-3) is established between the sharing AP 30 and the terminal apparatus 20. An example of a method of setting up the R-TWT function of the information communication system 1A according to the second embodiment will be described below with reference to Fig. 18.

First, the sharing AP 30 transmits TWT information to each of the shared APs 40 (S21). The TWT information includes information regarding a link (transmission path) in which the TWT function can be used. Then, each of the shared APs 40 broadcasts a beacon signal including the TWT information (S22). This beacon signal can be received by each of A-STAs #1 to #3 of the terminal apparatus 20. When receiving the beacon signal, each of A-STAs #1 to #3 acquires the TWT information and transmits the TWT information to the non-AP_MLD.

The non-AP_MLD transmits a TWT request to the sharing AP 30 on the basis of the received TWT information (S23). The TWT request includes an identifier of the non-AP_MLD and information regarding the A-STAs (links) available for the multi-AP connection. The sharing AP 30 determines a setup target of the R-TWT SP based on the TWT request received via at least one shared AP 40. Then, the sharing AP 30 transmits an R-TWT response to the non-AP_MLD (S24). The R-TWT response is transmitted via all the shared APs 40 for which the R-TWT SP is set up. When the non-AP_MLD receives the R-TWT response, setup of the R-TWT function (TWT agreement setup) is completed.

Thereafter, the sharing AP 30 transmits schedule information to the shared AP 40 (S25). The schedule information includes information regarding the R-TWT SP set by the TWT agreement setup. Then, each of the shared AP 40 broadcasts a beacon signal including the schedule information (S26). This beacon signal can be received by each of A-STAs #1 to #3 of the terminal apparatus 20. When receiving the beacon signal, each of A-STAs #1 to #3 acquires the schedule information and transmits the schedule information to the non-AP_MLD. Accordingly, the scheduling of the R-TWT SP is completed.

### <2-2-2> Method of Using R-TWT Function

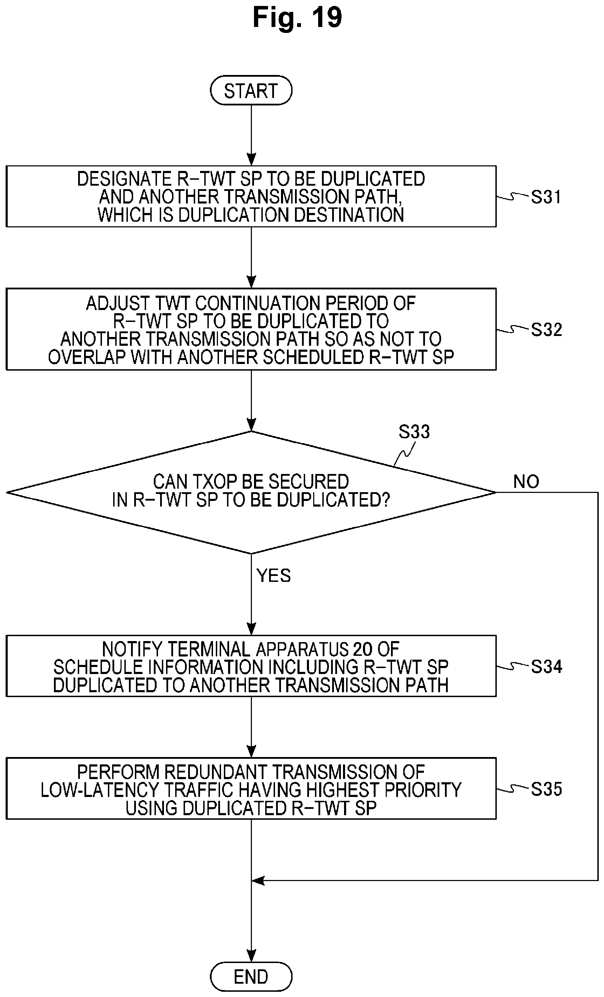

Fig. 19 is a flowchart illustrating an example of a method of using the R-TWT function of the information communication system according to the second embodiment. An example of a method of using the R-TWT function of the information communication system according to the second embodiment will be described below with reference to Fig. 19.

The management unit 314 of the sharing AP 30 establishes a multi-AP connection with the terminal apparatus 20 using the plurality of shared APs 30, and after scheduling at least one R-TWT SP, starts a series of processing illustrated in Fig. 19 (start).

First, the schedule control unit 323 of the management unit 314 of the sharing AP 30 designates the R-TWT SP to be duplicated (duplication source) and another transmission path, which is a duplication destination (S31). The R-TWT SP, which is a duplication source, corresponds to an already scheduled R-TWT SP. For example, the schedule control unit 323 designates the R-TWT SP, which is a duplication source, on the basis of the fact that the transmission of the low-latency traffic having the highest priority is allocated.

Next, as in the first embodiment, the schedule control unit 323 of the management unit 314 of the sharing AP 30 adjusts the TWT continuation period of the R-TWT SP to be duplicated to another transmission path so as not to overlap with another scheduled R-TWT SP (S32).

Next, the schedule control unit 323 of the management unit 314 of the sharing AP 30 checks whether a TXOP can be secured in the R-TWT SP to be duplicated (S33). In the processing of S33, the schedule control unit 323 compares, for example, the TXOP with the TWT continuation period of the R-TWT SP to be duplicated.

If it is confirmed by the processing of S33 that the TXOP can be secured in the R-TWT SP to be duplicated (S33: YES), that is, when the TXOP can be secured in at least one of the other transmission paths as the duplication destinations, the schedule control unit 323 proceeds to the processing of S34.

If it is confirmed by the processing of S33 that the TXOP cannot be secured in the R-TWT SP to be duplicated (S33: NO), that is, when the TXOP cannot be secured in all the other transmission paths as the duplication destinations, the schedule control unit 323 ends the series of processing of Fig. 19. In this case, the schedule control unit 323 stops the duplication of the R-TWT SP to another transmission path, which is a duplication destination.

In the processing of S34, the management unit 314 of the sharing AP 30 notifies the terminal apparatus 20 of schedule information including the R-TWT SP duplicated to another transmission path. Specifically, the schedule control unit 323 of the management unit 314 transmits the schedule information to each of the shared APs 40 belonging to the sharing AP 30 using the frame processing unit 312 and the transmission/reception unit 313 of each transmission path. Then, the beacon control unit 421 of the management unit 413 of each of the shared APs 40 generates a beacon signal including the received schedule information, and transmits (radiates) a radio signal via the MAC frame processing unit 411 and the transmission/reception unit 412.

When the processing of S34 is completed, the schedule control unit 323 of the management unit 314 of the sharing AP 30 performs redundant transmission of the low-latency traffic having the highest priority using the duplicated R-TWT SP (S35). Specifically, the schedule control unit 323 notifies the frame processing unit 312 of the schedule information including the duplicated R-TWT SP. Then, the frame processing unit 312 outputs the trigger frame instructing the transfer of the low-latency traffic to each of the transmission/reception unit 313 to which the R-TWT SP, which is a duplication source, is allocated and the transmission/reception unit 313 to which the R-TWT SP, which is a duplication destination, is allocated based on the same TWT start time. As a result, the trigger frame is transmitted to the A-STA of the terminal apparatus 20 via the associated shared AP 40 for each transmission/reception unit 313. Then, each A-STA of the terminal apparatus 20 transmits the low-latency traffic to the sharing AP 30 on the basis of the trigger frame. That is, the low-latency traffic is redundantly transmitted via each of the plurality of transmission paths in the multi-AP connection. When the processing of S35 is completed, the management unit 314 of the sharing AP 30 ends the series of processing of Fig. 19.

As described above, in the information communication system 1A according to the second embodiment, the management unit 314 of the sharing AP 30 can schedule the R-TWT SP to a plurality of transmission paths at the same timing and redundantly transmit the low-latency traffic. Note that the management unit 314 of the sharing AP 30 may sequentially perform scheduling by executing the above-described series of processing according to the queuing status of the low-latency traffic.

### <2-2-3> Specific Example of Communication Using R-TWT Function

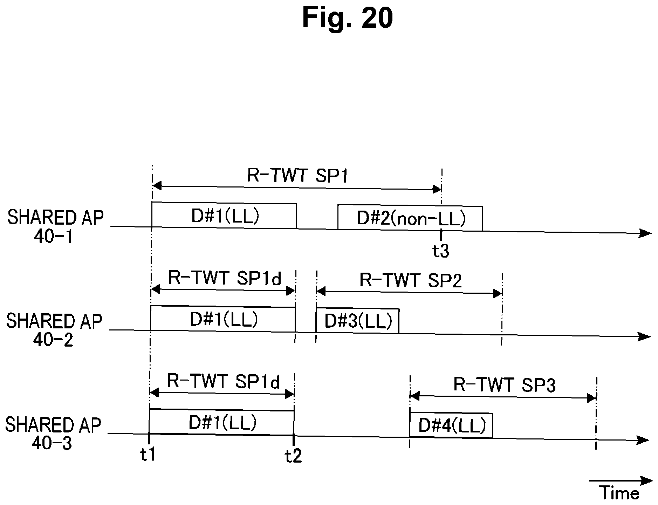

Fig. 20 is a time chart illustrating a specific example of communication using the R-TWT function of the information communication system according to the second embodiment. Fig. 20 illustrates a processing sequence of the R-TWT function in a case where a multi-AP connection using three transmission paths (shared APs 40-1, 40-2, and 40-3) is established between the sharing AP 30 and the terminal apparatus 20. A specific example of communication using the R-TWT function in the information communication system 1A according to the second embodiment will be described below with reference to Fig. 20.

In the present example, based on the beacon signal including the schedule information of the R-TWT SP, R-TWT SP1 is set in the shared AP 40-1, R-TWT SP1d and R-TWT SP2 are set in the shared AP 40-2, and R-TWT SP1d and R-TWT SP3 are set in the shared AP 40-3. R-TWT SP1 corresponds to the R-TWT SP allocated to transmission of the low-latency traffic having the highest priority. R-TWT SP2 and R-TWT SP3 correspond to the R-TWT SP scheduled before R-TWT SP1 is duplicated. R-TWT SP1d of each of the shared APs 40-2 and 40-3 corresponds to the R-TWT SP duplicated using R-TWT SP1 as a duplication source. The TWT continuation period of each R-TWT SP1d is set shorter than that of R-TWT SP1 in order to avoid overlapping with R-TWT SP2 and R-TWT SP3.

Time t1 corresponds to the TWT start time of each of R-TWT SP1 and R-TWT SP1d. At time t1, transmission of data D#1 corresponding to the low-latency traffic (LL) is started in each of shared APs 40-1 to 40-3. The transmission of data D#2 ends at time t2. In the present example, time t2 corresponds to the end time of R-TWT SP1d. In addition, in R-TWT SP1, after data D#1 is transmitted, transmission of data D#2 corresponding to the non-low-latency traffic (non-LL) is started. In addition, at the start time of R-TWT SP2, data D#3 corresponding to the low-latency traffic is transmitted. At the start time of R-TWT SP3, data D#4 corresponding to the low-latency traffic is transmitted.

As described above, the information communication system 1A can redundantly transmit the low-latency traffic (data D#1) using R-TWT SP1, which is a duplication source, set in the shared AP 40-1 and duplicated R-TWT SP1d set in each of the shared APs 40-2 and 40-3.

### <2-3> Effects of Second Embodiment

In the information communication system 1A according to the second embodiment, as in the first embodiment, the sharing AP 30 duplicates the R-TWT SP scheduled to a single transmission path constituting the multi-AP connection to other transmission paths constituting the multi-AP connection, and schedules the R-TWT SP to a plurality of transmission paths at the same timing. At this time, the sharing AP 30 designates the R-TWT SP of the transmission path, which is a duplication source, and the TWT continuation period of another transmission path, which is a duplication destination. Then, the sharing AP 30 redundantly transmits the low-latency traffic having the highest priority using each of the R-TWT SP, which is a duplication source, and the duplicated R-TWT SP.

As a result, as in the first embodiment, the information communication system 1A according to the second embodiment can transmit the low-latency traffic using other transmission paths having a small effect of interference or the like even when affected by interference or the like in some of the plurality of transmission paths constituting the multi-AP connection. As a result, the information communication system 1A according to the second embodiment can more reliably transmit the low-latency traffic, and can reduce the latency and jitter of the traffic. Therefore, the information communication system 1A according to the second embodiment can provide an access point and a terminal apparatus capable of satisfying request latency of low-latency traffic.

Note that, in the information communication system 1A according to the second embodiment, at the time of transmitting the low-latency traffic using the duplicated R-TWT SP, for example, the transmission timing of the frame is synchronized, and the same data is transmitted. As a result, the reception success rate of frames transmitted between the plurality of shared APs 40 under the sharing AP 30 and the terminal apparatus 20 can be improved. Then, in the information communication system 1A, the communicable area can be substantially expanded according to the disposition of the plurality of shared APs 40.

In addition, in the information communication system 1A according to the second embodiment, the sharing AP 30 may transmit different data using the R-TWT SP of some transmission paths as long as it is possible to redundantly transmit the low-latency traffic. When different pieces of non-identical data are transmitted in the duplicated R-TWT SP, the information communication system 1A can increase the transmission speed of the low-latency traffic.

### <3> Others

The conversion processing from a radio frame to a radio signal described in the embodiment described above includes, for example, convolutional encoding processing, interleave processing, subcarrier modulation processing, inverse fast Fourier transform processing, OFDM modulation processing, and frequency conversion processing. The conversion processing from a radio signal to a radio frame described in the embodiment includes, for example, frequency conversion processing, OFDM demodulation processing, fast Fourier transform processing, subcarrier demodulation processing, deinterleave processing, and Viterbi decoding processing.

In the embodiment described above, each of the CPU 11 of the access point 10, the CPU 21 of the terminal apparatus 20, the CPU of the sharing AP 30, and the CPU of the shared AP 40 may be another circuit. For example, each of the access point 10, the terminal apparatus 20, the sharing AP 30, and the shared AP 40 may include a micro processing unit (MPU) or the like instead of the CPU. Each of the processing described in each embodiment may be implemented by dedicated hardware. Processing of each of the access point 10, the terminal apparatus 20, the sharing AP 30, and the shared AP 40 may include processing executed by software and processing executed by hardware in combination or may include only one of the pieces of processing.

The flowcharts used to describe the operation in the embodiment described above are merely examples. Each operation described in the embodiment may be interchanged within a possible processing order, or other processing may be added. For example, the multi-link or multi-AP connection setup methods and the R-TWT communication method described in the embodiment described above are merely examples. As the wireless communication standard, a wireless communication standard different from the IEEE 802.11 standard may be used.

Note that the present invention is not limited to the embodiments described above, and various modifications can be made in the implementation stage without departing from the gist of the invention. In addition, the embodiments may be implemented in appropriate combination, and in that case, combined effects can be obtained. Further, the above embodiments include various inventions, and various inventions can be extracted by combinations selected from a plurality of disclosed components. For example, even if some components are deleted from all the components described in the embodiments, a configuration from which the components have been deleted can be extracted as an invention as long as the configuration can solve the problems and can achieve effects.

### Reference Signs List

1, 1A Information communication system
10 Access point
20 Terminal apparatus
30 Sharing access point
40-1, 40-2, 40-3 Shared access point
11, 21 CPU
12, 22 ROM
13, 23 RAM
14, 24 Wireless communication module
15 Wired communication module
25 Display
26 Storage
111, 211, 323 Schedule control unit
112, 212 Data distribution unit
121 Beacon control unit
122 R-TWT control unit
123, 222, 312 Frame processing unit
124, 223, 313-1, 313-2, 313-3, 412 Transmission/reception unit
131, 231 Classification unit
132A, 132B, 132C, 132D, 232A, 232B, 232C, 232D Queue
133A, 133B, 133C, 133D, 233A, 233B, 233C, 233D Carrier sensing execution unit
134, 234 Internal collision management unit
221 Beacon processing unit
311 Data processing unit
314, 413 Management unit
321 Terminal management unit
322 Multi-AP management unit
411 MAC frame processing unit
421 Beacon control unit
422 R-TWT processing unit

## Claims

1. An access point configured to transmit information to and from a terminal apparatus by using a plurality of radio links including a first radio link and a second radio link, the access point comprising:
a management unit that is configured to set a service period allocated to transfer of low-latency traffic to at least one of the plurality of radio links, and schedule, when a first service period is scheduled in the first radio link, a second service period in which a same start time and a same continuation period as a start time and a continuation period of the first service period are set to the second radio link, and notify the terminal apparatus of schedule information including information of each of the first service period and the second service period,
wherein
first data is transmitted via the first radio link in the first service period, and the first data is transmitted via the second radio link in the second service period.

2. The access point according to claim 1, wherein the management unit adjusts a continuation period of the second service period so as not to overlap with a third service period overlapping with the first service period when the third service period is scheduled in the second radio link before scheduling the second service period.

3. The access point according to claim 2, wherein the management unit stops scheduling of the second service period when a transmission opportunity (TXOP) cannot be secured in the second service period.

4. The access point according to claim 1, wherein the management unit transmits a trigger frame instructing transmission of the first data to the terminal apparatus using each of the first radio link and the second radio link based on the start time of the first service period.

5. The access point according to any one of claims 1 to 4, further comprising:
a first radio signal processing unit that establishes the first radio link with the terminal apparatus; and
a second radio signal processing unit that establishes the second radio link with the terminal apparatus,
wherein
the management unit outputs the schedule information to each of the first radio signal processing unit and the second radio signal processing unit, and causes the first radio signal processing unit and the second radio signal processing unit to transmit beacon signals including the schedule information by using the first radio link and the second radio link, respectively.

6. The access point according to any one of claims 1 to 4, further comprising:
a first transmission/reception unit that is connected to a first access point that establishes the first radio link with the terminal apparatus; and
a second transmission/reception unit that is connected to a second access point that establishes the second radio link with the terminal apparatus,
wherein
the management unit transmits the schedule information to the first access point and the second access point via the first transmission/reception unit and the second transmission/reception unit, respectively, and causes the first access point and the second access point to transmit beacon signals including the schedule information using the first radio link and the second radio link, respectively.

7. A terminal apparatus comprising:
a first radio signal processing unit that establishes a first radio link with an access point;
a second radio signal processing unit that establishes a second radio link with the access point;
a data distribution unit that distributes data to the first radio signal processing unit and the second radio signal processing unit; and
a schedule control unit that schedules a first service period in the first radio link and schedules a second service period in which a same start time as a start time of the first service period is set in the second radio link based on schedule information received from the access point,
wherein
the data distribution unit outputs first data corresponding to low-latency traffic received from a higher layer to each of the first radio signal processing unit and the second radio signal processing unit.

8. The terminal apparatus according to claim 7, wherein each of the first radio signal processing unit and the second radio signal processing unit transmits the first data to the access point based on reception of a trigger frame at a time based on the start time of the first service period.
